# EUROPEAN PATENT SPECIFICATION

(11) **EP 3 913 527 B1**
(45) Date of publication and mention of the grant of the patent: **24.12.2025**
(21) Application number: 21154815.1
(22) Date of filing: 02.02.2021
(51) Int. Cl.: G06V 40/10, G06V 20/56, G06V 10/82, G06V 10/80, G06F 18/25

(54) **METHOD AND DEVICE FOR PERFORMING BEHAVIOR PREDICTION BY USING EXPLAINABLE SELF-FOCUSED ATTENTION**
VERFAHREN UND VORRICHTUNG ZUR DURCHFÜHRUNG VON VERHALTENSVORHERSAGE UNTER VERWENDUNG ERKLÄRBARER SELBSTFOKUSSIERTER AUFMERKSAMKEIT
PROCÉDÉ ET DISPOSITIF PERMETTANT D'EFFECTUER UNE PRÉDICTION DE COMPORTEMENT À L'AIDE DE L'ATTENTION D'AUTO-ATTENTION AUTO-FOCALISÉE EXPLICATIVE

(30) Priority: 18.05.2020 US 202063026424 P; 28.12.2020 US 202017135396
(43) Date of publication of application: 24.11.2021
(73) Proprietor: Stradvision, Inc., Pohang-si, Gyeongsangbuk-do 37668 (KR)
(72) Inventor: JE, Hongmo, 37665 Pohang-si, Gyeongsangbuk-do (KR); YU, Dongkyu, 37585 Pohang-si, Gyeongsangbuk-do (KR); KANG, Bongnam, 37665 Pohang-si, Gyeongsangbuk-do (KR); KIM, Yongjoong, 37668 Pohang-si Gyeongsangbuk-do (KR)
(74) Representative: V.O.

(56) References cited:
- RANGA ADITHYA ET AL: "VRUNet: Multi-Task Learning Model for Intent Prediction of Vulnerable Road Users", vol. 2020, no. 16, 26 January 2020 (2020-01-26), pages 109-1 - 109-10, XP055823062, ISSN: 2470-1173, Retrieved from the Internet <URL:https://www.ingentaconnect.com/content/ist/ei/2020/00002020/00000016/art00012?crawler=true&mimetype=application/pdf> [retrieved on 20210711], DOI: 10.2352/ISSN.2470-1173.2020.16.AVM-109

## Description

This application claims the benefit of priority to U.S. Provisional Patent Application No. 63/026,424, filed on May 18, 2020 and U.S. Non-Provisional Patent Application No. 17/135,396, filed on December 28, 2020.

The present disclosure relates to behavior prediction; and more particularly, to a method and a device for performing the behavior prediction by using explainable self-focused attention.

Recently, methods of performing object identification and the like making use of machine learning are being studied.

Deep learning, which is one type of the machine learning, uses a neural network with several hidden layers between an input layer and an output layer, and shows a high performance in object identification.

And, the deep learning is used in various industries such as autonomous vehicle industry, autonomous airplane industry, autonomous robot industry, etc.

Especially, behavior prediction has been in development recently which predicts behavior, e.g., a trajectory, of an object, using perception, localization and mapping based on given videos and sensor information.

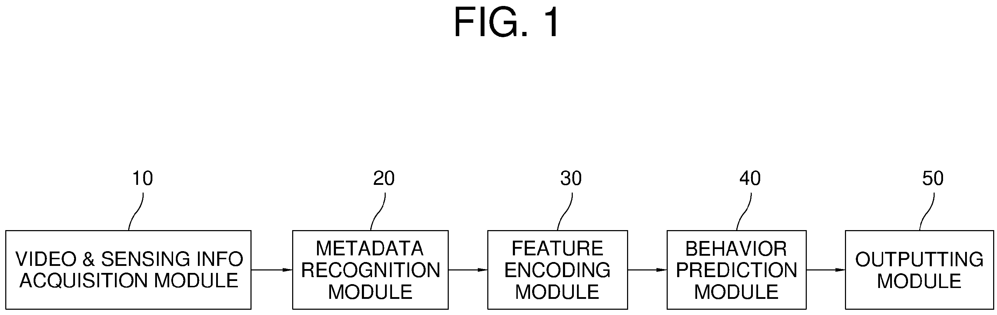

By referring to Fig. 1, in a conventional autonomous vehicle, a behavior prediction device acquires (1) a video taken while the autonomous vehicle is being driven and (2) sensing information detected by sensors of the autonomous vehicle, through a video & sensing information acquisition module 10, and acquires metadata corresponding to images corresponding to the each of frames in the video and the sensing information through a metadata recognition module 20. Herein, the metadata includes (1) analysis results on the images, such as bounding boxes of objects, traffic lights, traffic signs, etc., which are acquired by analyzing the images based on deep learning and (2) ego-vehicle poses, map information, etc. based on the sensing information. And, the behavior prediction device encodes the metadata, to thereby generate features for behavior prediction, through a feature encoding module 30, and applies learning operation to the features, to thereby perform on the behavior prediction of the objects, that is, trajectories of the objects, through a behavior prediction module 40 based on the deep learning, and outputs the behavior prediction of the objects through an outputting module 50.

Meanwhile, to predict the behavior, an LSTM (Long Short-Term Memory) is used conventionally for analysis of consecutive images, and recently a performance of the prediction is improved by using a GAN (Generative Adversarial Network) at least part of which is configured as the LSTM.

However, a deep learning network is not explainable in general. That is, one can hardly understand why the deep learning network has arrived at such a decision or which feature has affected the prediction.

Therefore, a conventional behavior prediction network has been improved by merely adding more complex models and using supplemental techniques without regard to features actually affecting the behavior, and as a result, a device using the conventional behavior prediction network as such over-consumes computing resources. Relevant prior art includes: A. Ranga, et al. "VRUNet: Multi-Task Learning Model for Intent Prediction of Vulnerable Road Users." Electronic Imaging 32 (2020): 1-10, which discloses a multi-task learning model for intent prediction of vulnerable road users.

It is an object of the present disclosure to solve all the aforementioned problems.

It is another object of the present disclosure to allow information on one or more affecting factors, determined as affecting one or more behavior predictions by a behavior prediction network, to be provided to a user.

It is still another object of the present disclosure to allow the user to pay attention to one or more areas of interest (AOls) to be marked when the behavior predictions of a specific object is performed by the behavior prediction network.

It is still yet another object of the present disclosure to efficiently improve a performance of the behavior prediction network by using the affecting factors determined as affecting the behavior predictions.

In order to accomplish the objects above, distinctive structures of the present disclosure are described as follows.

In accordance with one aspect of the present invention, there is provided a method for predicting trajectories, comprising steps of:(1) taking a video for testing by a camera mounted on a moving subject;(2) acquiring sensing information for testing, detected by one or more sensors mounted on the moving subject;(a) performing the following processes by a trajectory prediction device (1000) or by another device supported by the trajectory prediction device (1000);(a)(i) a process of inputting each of one or more test images corresponding to each of one or more frames for testing on the video for testing and each piece of the sensing information for testing corresponding to each of the frames for testing into a metadata recognition module (200), to thereby allow the metadata recognition module to apply at least one learned operation to the test images and the sensing information for testing and thus to output each piece of metadata for testing corresponding to each of the frames for testing, and(a) (ii) a process of inputting the metadata for testing into a feature encoding module (300), to thereby allow the feature encoding module to encode the metadata for testing and thus to output each of features for testing, corresponding to each of the frames for testing;(b) the trajectory prediction device (1000) performing or supporting another device to perform(b)(iii) a process of inputting each of the features for testing into a trajectory prediction module (400), to thereby allow the trajectory prediction module to analyze the features for testing and predict each of one or more trajectories of each of one or more objects for testing, through the learned operation, and thus generate each of the trajectory predictions for testing; and (c)(i) a process of allowing an outputting module (500) to output each of trajectory results for testing, corresponding to each of the trajectory predictions for testing, of each of the objects for testing,characterized in that the method is configured for predicting trajectories using explainable self-focused attention in that:step (b) further comprises:(b)(i) a process of inputting each of the test images, each piece of the metadata for testing, and each of the features for testing into an explaining module (600), to thereby allow the explaining module to generate each piece of explanation information for testing, corresponding to each of the frames for testing, on each of affecting factors for testing determined as affecting one or more trajectory predictions for testing for each of the frames for testing,(b)(ii) a process of inputting each of the test images and each piece of the metadata for testing into a self-focused attention module (700), to thereby allow the self-focused attention module to output, through the learned operation, each of attention maps for testing corresponding to each of the frames for testing wherein each of the attention maps for testing is created by marking one or more areas of interest (AOls) for testing, to be used for the trajectory predictions for testing, on each of the test images,in that the process in step (b)(iii) further comprises inputting each of the attention maps for testing into the trajectory prediction module (400) in addition to inputting each of the features for testing inputting therein, to thereby allow the trajectory prediction module to analyze the features for testing and the attention maps for testing,and in that step (c) further comprises(c)( ii) a process of allowing a visualization module (800) to visualize and output the affecting factors for testing by marking at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

As one example, a learning device has trained the explaining module and the self-focused attention module by performing or supporting another device to perform: (i) a process of inputting each of training images corresponding to each of frames for training and each piece of sensing information for training corresponding to each of the frames for training into the metadata recognition module, to thereby allow the metadata recognition module to output each piece of metadata for training corresponding to each of the frames for training, (ii) a process of inputting the metadata for training into the feature encoding module, to thereby allow the feature encoding module to encode the metadata for training and thus to output each of features for training, corresponding to each of the frames for training, (iii) a process of inputting each of the training images, each piece of the metadata for training, and each of the features for training into the explaining module, to thereby allow the explaining module to generate each piece of explanation information for training corresponding to each of the frames for training, on each of affecting factors for training determined as affecting one or more trajectory predictions for training for each of the frames for training, (iv) a process of inputting each piece of the explanation information for training and each piece of the metadata for training into the self-focused attention module, to thereby allow the self-focused attention module to analyze the explanation information for training and the metadata for training and thus to output each of attention maps for training corresponding to each of the frames for training wherein each of the attention maps for training is created by marking one or more areas of interest for training, to be used for the trajectory predictions for training, corresponding to each of the frames for training, and (v) a process of minimizing (v-1) each of one or more explanation losses calculated by referring to each piece of the explanation information for training and its corresponding each of explanation ground truths and (v-2) each of one or more attention losses calculated by referring to each of the attention maps for training and its corresponding each of attention ground truths.

As one example, at the step of (b), the trajectory prediction device performs or supports another device to perform a process of instructing the explaining module to (i) reduce dimensions of the test images, the metadata for testing, and the features for testing, to thereby generate each of latent features for testing corresponding to each of the frames for testing, through an encoder of an autoencoder and (ii) reconstruct each of the latent features for testing and mark each of the affecting factors for testing as the areas of interest for testing, to thereby generate each piece of the explanation information for testing, through a decoder of the autoencoder.

As one example, at the step of (c), the trajectory prediction device performs or supports another device to perform a process of instructing the visualization module to mark at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

As one example, at the step of (b), the behavior prediction device performs or supports another device to perform a process of instructing the explaining module to (i) (i-1) apply the learned operation to the test images, the metadata for testing, and the features for testing, to thereby generate each of semantic segmentation images for testing corresponding to each of the frames for testing and (i-2) identify instance-wise areas of interest on the semantic segmentation images for testing, through the autoencoder, and (ii) generate each of explanation images for testing, corresponding to each of the frames for testing, where the affecting factors for testing are marked by referring to results of said (i-2).

As one example, at the step of (b), the trajectory prediction device performs or supports another device to perform a process of instructing the explaining module to apply the learning operation to the metadata for testing, to thereby generate decision trees for testing based on the metadata for testing related to all of the objects for testing on the test images.

As one example, at the step of (c), the trajectory prediction device performs or supports another device to perform a process of instructing the visualization module to output state information on at least one target object, determined as affecting the trajectory predictions for testing in each of the frames for testing, by referring to the decision trees for testing and the explanation information for testing.

As one example, at the step of (a), the trajectory prediction device performs or supports another device to perform a process of inputting the test images and the sensing information for testing into the metadata recognition module, to thereby allow the metadata recognition module to (1) detect environment information on surroundings of the moving subject through a perception module and (2) detect position information on the moving subject through a localization and mapping module.

As one example, each piece of the metadata for testing includes each of object bounding boxes corresponding to each of the objects for testing, each piece of pose information on the moving subject, and each piece of map information corresponding to a location of the moving subject.

As one example, the trajectory prediction module includes an RNN (Recurrent Neural Network) which adopts at least one of an LSTM (Long Short-Term Memory) algorithm and an LSTM-GAN (Generative Adversarial Network) algorithm.

In accordance with another aspect of the present invention, there is provided a trajectory prediction device (1000) for predicting trajectories, installed on a moving subject, the device comprising:a camera mounted on the moving subject;one or more sensors mounted on the moving subject;at least one memory (1001) that stores instructions; andat least one processor (1002) configured to execute the instructions to perform or support another device to perform the following processes:(I)(i) a process of inputting each of one or more test images corresponding to each of one or more frames for testing on the video for testing taken by the camera and each piece of the sensing information for testing, detected while the subject is moving corresponding to each of the frames for testing into a metadata recognition module (200), to thereby allow the metadata recognition module to apply at least one learned operation to the test images and the sensing information for testing and thus to output each piece of metadata for testing corresponding to each of the frames for testing, and(I)(ii) a process of inputting the metadata for testing into a feature encoding module (300), to thereby allow the feature encoding module to encode the metadata for testing and thus to output each of features for testing, corresponding to each of the frames for testing,(II) (iii) a process of inputting each of the features for testing into a trajectory prediction module (400), to thereby allow the trajectory prediction module to analyze the features for testing and predict each of one or more trajectories of each of one or more objects for testing, through the learned operation, and thus generate each of the trajectory predictions for testing, and(III) (i) a process of allowing an outputting module (500) to output each of trajectory results for testing, corresponding to each of the trajectory predictions for testing, of each of the objects for testing;characterized in that the trajectory prediction device (1000) is configured for predicting trajectories using explainable self-focused attention, in that at the process of (II), the processor performs or supports another device to further perform(ll)(i) a process of inputting each of the test images, each piece of the metadata for testing, and each of the features for testing into an explaining module (600),to thereby allow the explaining module to generate each piece of explanation information for testing, corresponding to each of the frames for testing, on each of affecting factors for testing determined as affecting one or more trajectory predictions for testing for each of the frames for testing,(II)(ii) a process of inputting each of the test images and each piece of the metadata for testing into a self-focused attention module (700), to thereby allow the self-focused attention module to output, through the learned operation, each of attention maps for testing corresponding to each of the frames for testing wherein each of the attention maps for testing is created by marking one or more areas of interest (AOls) for testing, to be used for the trajectory predictions for testing, on each of the test images,in that the process of (II)(iii) further comprises inputting each of the attention maps for testing into the trajectory prediction module (400) in addition to inputting each of the features for testing inputting therein, to thereby allow the trajectory prediction module to analyze the features for testing and the attention maps for testing,and in that the process of (III) further comprises(lll)(ii) a process of allowing a visualization module (800) to visualize and output the affecting factors for testing by marking at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

As one example, a learning device has trained the explaining module and the self-focused attention module by performing or supporting another device to perform: (i) a process of inputting each of training images corresponding to each of frames for training and each piece of sensing information for training corresponding to each of the frames for training into the metadata recognition module, to thereby allow the metadata recognition module to output each piece of metadata for training corresponding to each of the frames for training, (ii) a process of inputting the metadata for training into the feature encoding module, to thereby allow the feature encoding module to encode the metadata for training and thus to output each of features for training, corresponding to each of the frames for training, (iii) a process of inputting each of the training images, each piece of the metadata for training, and each of the features for training into the explaining module, to thereby allow the explaining module to generate each piece of explanation information for training corresponding to each of the frames for training, on each of affecting factors for training determined as affecting one or more trajectory predictions for training for each of the frames for training, (iv) a process of inputting each piece of the explanation information for training and each piece of the metadata for training into the self-focused attention module, to thereby allow the self-focused attention module to analyze the explanation information for training and the metadata for training and thus to output each of attention maps for training corresponding to each of the frames for training wherein each of the attention maps for training is created by marking one or more areas of interest for training, to be used for the trajectory predictions for training, corresponding to each of the frames for training, and (v) a process of minimizing (v-1) each of one or more explanation losses calculated by referring to each piece of the explanation information for training and its corresponding each of explanation ground truths and (v-2) each of one or more attention losses calculated by referring to each of the attention maps for training and its corresponding each of attention ground truths.

As one example, at the process of (II), the processor performs or supports another device to perform a process of instructing the explaining module to (i) reduce dimensions of the test images, the metadata for testing, and the features for testing, to thereby generate each of latent features for testing corresponding to each of the frames for testing, through an encoder of an autoencoder and (ii) reconstruct each of the latent features for testing and mark each of the affecting factors for testing as the areas of interest for testing, to thereby generate each piece of the explanation information for testing, through a decoder of the autoencoder.

As one example, at the process of (III), the processor performs or supports another device to perform a process of instructing the visualization module to mark at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

As one example, at the process of (II), the processor performs or supports another device to perform a process of instructing the explaining module to (i) (i-1) apply the learned operation to the test images, the metadata for testing, and the features for testing, to thereby generate each of semantic segmentation images for testing corresponding to each of the frames for testing and (i-2) identify instance-wise areas of interest on the semantic segmentation images for testing, through the autoencoder, and (ii) generate each of explanation images for testing, corresponding to each of the frames for testing, where the affecting factors for testing are marked by referring to results of said (i-2).
Fig. 1 is a block diagram of a conventional behavior prediction device.
Fig. 2 is a drawing schematically illustrating a behavior prediction device which performs one or more behavior predictions by using explainable self-focused attention in accordance with one example embodiment of the present disclosure.
Fig. 3 is a block diagram illustrating a configuration of the behavior prediction device which performs the behavior predictions by using the explainable self-focused attention in accordance with one example embodiment of the present disclosure.
Fig. 4 is a drawing schematically illustrating an example of generating explanation information for the behavior predictions by using the explainable self-focused attention in accordance with one example embodiment of the present disclosure.
Fig. 5 is a drawing schematically illustrating another example of generating the explanation information for the behavior predictions by using the explainable self-focused attention in accordance with one example embodiment of the present disclosure.
Figs. 6A and 6B are drawings schematically illustrating processes of generating self-focused attention for the behavior predictions by using the explainable self-focused attention in accordance with one example embodiment of the present disclosure.
Fig. 7 is a drawing schematically illustrating visualization of the explanation information for the behavior predictions by using the explainable self-focused attention in accordance with one example embodiment of the present disclosure.
Fig. 8 is a drawing schematically illustrating processes of training an explaining module and a self-focused attention module in the behavior prediction device for the behavior predictions by using the explainable self-focused attention in accordance with one example embodiment of the present disclosure.

Detailed explanation on the present disclosure to be made below refer to attached drawings and diagrams illustrated as specific embodiment examples under which the present disclosure may be implemented to make clear of purposes, technical solutions, and advantages of the present disclosure. These embodiments are described in sufficient detail to enable those skilled in the art to practice the invention.

Besides, in the detailed description and claims of the present disclosure, a term "include" and its variations are not intended to exclude other technical features, additions, components or steps. Other objects, benefits and features of the present disclosure will be revealed to one skilled in the art, partially from the specification and partially from the implementation of the present disclosure. The following examples and drawings will be provided as examples but they are not intended to limit the present disclosure.

To allow those skilled in the art to carry out the present disclosure easily, the example embodiments of the present disclosure by referring to attached diagrams will be explained in detail as shown below.

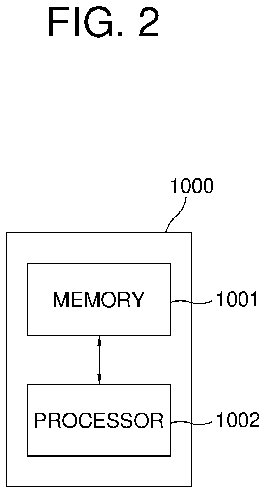

Fig. 2 is a drawing schematically illustrating a behavior prediction device which performs one or more behavior predictions by using explainable self-focused attention in accordance with one example embodiment of the present disclosure. By referring to Fig. 2, the behavior prediction device 1000 may include a memory 1001 for storing instructions to perform on the behavior predictions by using the explainable self-focused attention and a processor 1002 for performing the behavior predictions by using the explainable self-focused attention according to the instructions in the memory 1001.

Specifically, the behavior prediction device 1000 may typically achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

The processor of the computing device may include hardware configuration of MPU (Micro Processing Unit) or CPU (Central Processing Unit), cache memory, data bus, etc. Additionally, the computing device may further include software configuration of OS and applications that achieve specific purposes.

However, such description of the computing device does not exclude an integrated device including any combination of a processor, a memory, a medium, or any other computing components for implementing the present disclosure.

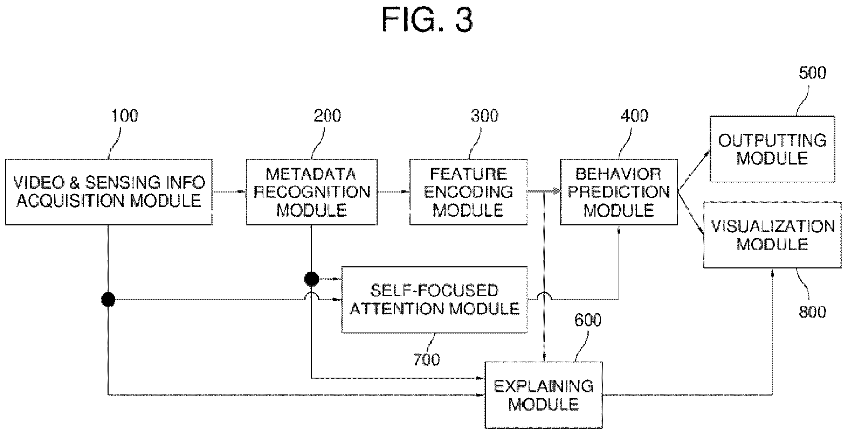

Also, by referring to Fig. 3, the behavior prediction device 1000 may include a video & sensing information acquisition module 100, a metadata recognition module 200, a feature encoding module 300, a behavior prediction module 400, an outputting module 500, an explaining module 600, a self-focused attention module 700, and a visualization module 800.

Processes of the behavior predictions with the explainable self-focused attention by using the behavior prediction device 1000 are described below. The description below mainly explains an example of an autonomous vehicle as a device for the behavior predictions of nearby objects. But the scope of the present disclosure is not limited thereto and also applies to autonomous aircrafts, autonomous robots, mobile devices, etc.

By referring to Fig. 3, the behavior prediction device 1000 may perform or support another device to perform a process of acquiring (1) a video taken by at least one camera mounted on a moving subject, e.g., the autonomous vehicle, where the behavior prediction device 1000 is installed and (2) sensing information acquired by one or more sensors mounted on the moving subject.

Herein, the behavior prediction device 1000 may perform or support another device to perform a process of acquiring (1) a video for testing taken by the camera and (2) sensing information for testing detected by the sensors of the autonomous vehicle, e.g., an ego-vehicle, while the autonomous vehicle is being driven, through the video & sensing information acquisition module 100.

Meanwhile, the video is described above as acquired from the camera, but the scope of the present disclosure is not limited thereto, and the video may be acquired by using a LiDAR, a radar or through sensor fusion technology. Also, the acquired video may include environment information on areas corresponding to specific visual fields seen from the moving subject or environment information on surroundings of the moving subject.

Next, if the video for testing and the sensing information for testing are acquired, the behavior prediction device 1000 may perform or support another device to perform a process of inputting each of one or more test images corresponding to each of one or more frames for testing on the video for testing and each piece of the sensing information for testing corresponding to each of the frames for testing into the metadata recognition module 200, to thereby allow the metadata recognition module 200 to apply at least one learning operation to each of the test images and each piece of the sensing information for testing and thus to output each piece of metadata for testing corresponding to each of the frames for testing.

Specifically, the behavior prediction device 1000 may perform or support another device to perform a process of inputting each of the test images and each piece of the sensing information for testing, corresponding to each of the frames for testing, into the metadata recognition module 200, to thereby allow the metadata recognition module 200 to (i) detect environment information on surroundings of the moving subject through a perception module (not illustrated) and (ii) detect position information on the moving subject through a localization & mapping module (not illustrated).

And, the perception module may include an object detection network based on deep learning and a segmentation network based on the deep learning, etc. Also, the metadata recognition module 200 may generate each piece of the metadata for testing corresponding to each of the frames for testing by using each piece of the sensing information for testing and each of results of analyzing each of the test images based on the deep learning.

Also, each piece of the metadata for testing corresponding to each of the frames for testing may include each of object bounding boxes corresponding to each of the objects for testing, each piece of pose information on the moving subject, traffic lights, traffic signs, and each piece of map information corresponding to a location of the moving subject, but the scope of the present disclosure is not limited thereto, and may include various information to be used for one or more behavior predictions for testing.

Then, the behavior prediction device 1000 may perform or support another device to perform a process of inputting each piece of the metadata for testing, corresponding to each of the frames for testing, into the feature encoding module 300, to thereby allow the feature encoding module 300 to encode each piece of the metadata for testing corresponding to each of the frames for testing and thus to output each of features for testing, corresponding to each of the frames for testing, to be used for the behavior predictions for testing.

Next, the behavior prediction device 1000 may perform or support another device to perform a process of inputting each of the test images, each piece of the metadata for testing, and each of the features for testing, corresponding to each of the frames for testing, into the explaining module 600, to thereby allow the explaining module 600 to generate each piece of explanation information for testing on each of affecting factors for testing determined as affecting the behavior predictions for testing for each of the frames for testing. Herein, the explanation information for testing may be explanation data on situations the objects for testing are in on the test images.

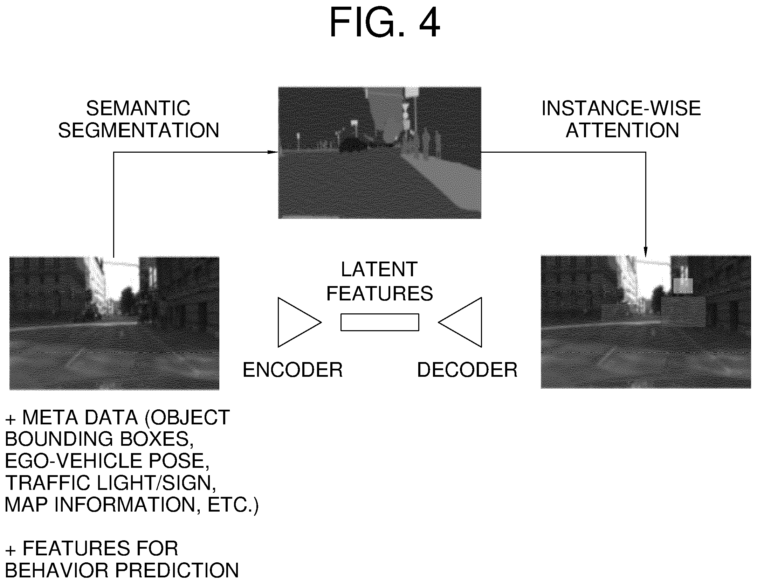

Specifically, by referring to Fig. 4, the behavior prediction device 1000 may perform or support another device to perform a process of instructing the explaining module 600 to (i) reduce dimensions of each of the test images, each piece of the metadata for testing, and each of the features for testing, corresponding to each of the frames for testing, to thereby generate each of latent features for testing corresponding to each of the frames for testing, through an encoder of an autoencoder and (ii) reconstruct each of the latent features for testing and mark each of the affecting factors for testing, determined as affecting the behavior predictions for testing, as each of one or more areas of interest (AOls) for testing, to thereby generate each piece of the explanation information for testing, through a decoder of the autoencoder.

That is, the behavior prediction device 1000 may perform or support another device to perform a process of instructing the explaining module 600 to (i) (i-1) apply the learning operation to each of the test images, each piece of the metadata for testing, and each of the features for testing, corresponding to each of the frames for testing, to thereby generate each of semantic segmentation images for testing corresponding to each of the frames for testing and (i-2) identify instance-wise areas of interest on the semantic segmentation images for testing, through the autoencoder, and (ii) generate each of explanation images for testing, corresponding to each of the frames for testing, where the affecting factors for testing are marked by referring to results of said (i-2).

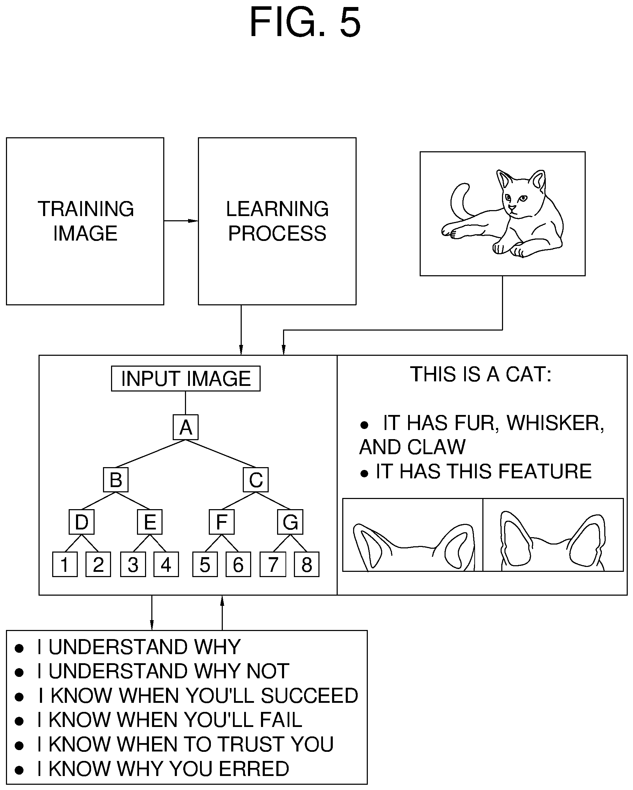

Also, by referring to Fig. 5, the behavior prediction device 1000 may perform or support another device to perform a process of instructing the explaining module 600 to apply the learning operation to each piece of the metadata for testing corresponding to each of the frames for testing, to thereby generate decision trees for testing based on the metadata for testing related to all of the objects for testing on the test images.

As one example, if an object is recognized as a "cat", the explaining module 600 may generate a decision tree by using aspects of recognizing colors, shapes, etc. causing the object to be recognized as a "cat". As a result, a user may understand how a learning network recognizes the object as a "cat" by referring to the decision tree and may also see why the learning network makes an error in recognizing the object.

By referring to Fig. 3 again, the behavior prediction device 1000 may perform or support another device to perform a process of inputting each of the test images and each piece of the metadata for testing, corresponding to each of the frames for testing, into the self-focused attention module 700, to thereby allow the self-focused attention module 700 to output each of attention maps for testing corresponding to each of the frames for testing. Herein, each of the attention maps for testing may be created by marking, through the learning operation, each of the areas of interest (AOls) for testing corresponding to each of the objects for testing, to be used for the behavior predictions for testing, on each of the test images corresponding to each of the frames for testing.

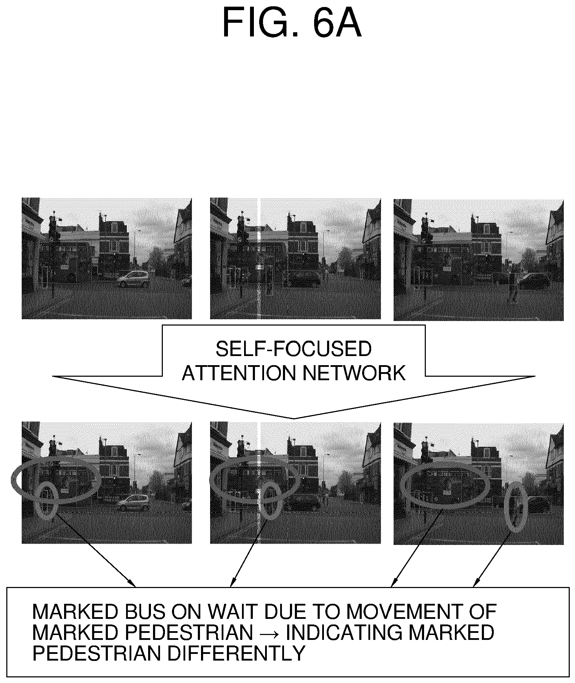

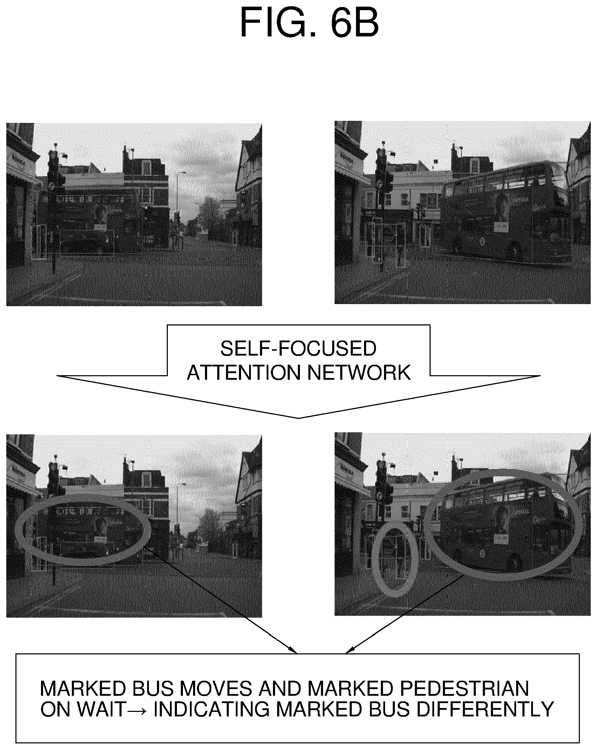

As one example, by referring to Figs. 6A and 6B, as a result of analyzing based on the deep learning, each of the images and each piece of the metadata corresponding to each of the frames taken by the camera while the autonomous vehicle is driven, if a marked bus is determined as on wait due to movement of a marked pedestrian, the marked pedestrian may be indicated differently (not illustrated) from the marked bus to allow the user to pay attention to the marked pedestrian as shown in Fig. 6A, and if the marked bus starts and the marked pedestrian is determined as on wait, the marked bus may be indicated differently (not illustrated) from the marked pedestrian to allow the user to pay attention to the marked pedestrian as shown in Fig. 6B.

Next, the behavior prediction device 1000 may perform or support another device to perform a process of inputting each of the features for testing and each of the attention maps for testing, corresponding to each of the frames for testing, into the behavior prediction module 400, to thereby allow the behavior prediction module 400 to analyze each of the features for testing and each of the attention maps for testing, corresponding to each of the frames for testing and predict each of one or more behaviors of each of the objects for testing, through the learning operation, and thus to generate each of the behavior predictions for testing.

Meanwhile, as another example different from predicting each of the trajectories of each of all of the objects on the images, the behavior prediction device 1000 may perform or support another device to perform a process of predicting each of the trajectories only of each of a part of the objects marked by using each of the attention maps.

Herein, the behavior prediction module 400 may include an RNN (Recurrent Neural Network) which adopts at least one of an LSTM (Long Short-Term Memory) algorithm and an LSTM-GAN (Generative Adversarial Network) algorithm.

Next, the behavior prediction device 1000 may perform or support another device to perform a process of allowing the outputting module 500 to output each of the behavior results for testing of each of the objects for testing, corresponding to each of the behavior predictions for testing. Simultaneously, the behavior prediction device 1000 may perform or support another device to perform a process of allowing the visualization module 800 to visualize and output the affecting factors for testing determined as affecting the behavior predictions for testing by referring to the explanation information for testing and the behavior results for testing.

Specifically, the behavior prediction device 1000 may perform or support another device to perform a process of instructing the visualization module 800 to mark at least one target object as one of the areas of interest (AOls) for testing on each of the test images and to output each of the marked test images, by referring to the behavior predictions for testing and the explanation information for testing. Herein, the target object may be determined as affecting the behavior predictions for testing in each of the frames for testing.

Also, the behavior prediction device 1000 may perform or support another device to perform a process of instructing the visualization module 800 to output state information on at least one target object, determined as affecting the behavior predictions for testing in each of the frames for testing, by referring to the decision trees for testing and the explanation information for testing.

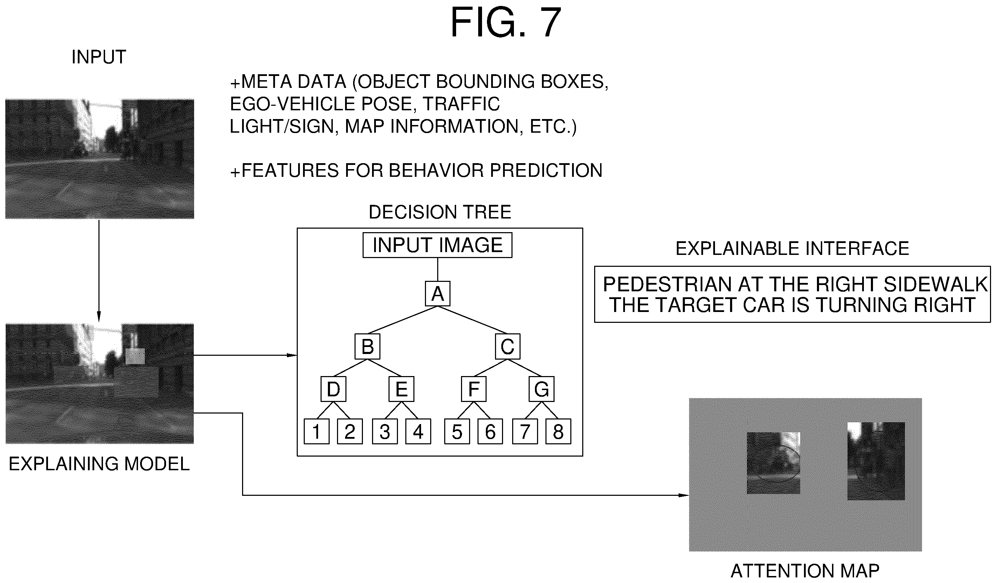

As one example, by referring to Fig. 7, the visualization module 800 may perform or support another device to perform a process of visually displaying each state of the pedestrian and a target car according to its corresponding piece of explanation information by referring to the decision trees or a process of visually displaying a specific attention map of the pedestrian and the target car.

Meanwhile, the explaining module 600 and the self-focused attention module 700 of the behavior prediction device 1000 may have been trained by a learning device.

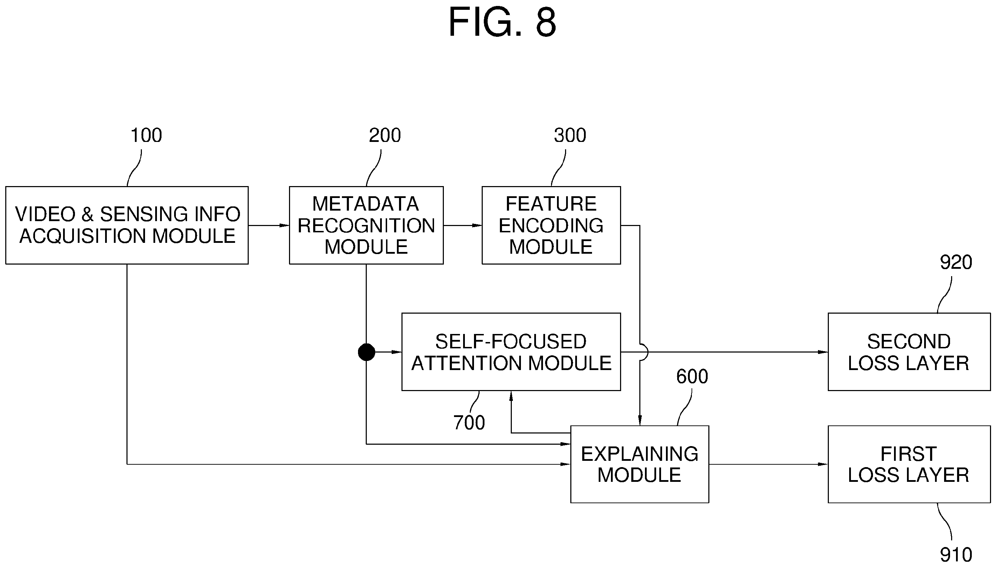

That is, by referring to Fig. 8, the learning device 2000 may have trained the explaining module 600 and the self-focused attention module 700 by performing or supporting another device to perform (i) a process of inputting each of training images corresponding to each of frames for training and each piece of sensing information for training, corresponding to each of the frames for training, into the metadata recognition module 200, to thereby allow the metadata recognition module 200 to output each piece of metadata for training corresponding to each of the frames for training, (ii) a process of inputting each piece of the metadata for training into the feature encoding module 300, to thereby allow the feature encoding module 300 to encode each piece of the metadata for training and thus to output each of features for training, corresponding to each of the frames for training, to be used for one or more behavior predictions for training, (iii) a process of inputting each of the training images, each piece of the metadata for training, and each of the features for training into the explaining module 600, to thereby allow the explaining module 600 to generate each piece of explanation information for training corresponding to each of the frames for training, on each of affecting factors for training determined as affecting the behavior prediction for training for each of the frames for training, (iv) a process of inputting each piece of the explanation information for training and each piece of the metadata for training into the self-focused attention module 700, to thereby allow the self-focused attention module 700 to analyze the explanation information for training and the metadata for training and thus to output each of attention maps for training, corresponding to each of the frames for training, created by marking one or more areas of interest (AOls) for training, for the behavior prediction for training, corresponding to each of the frames for training, and (v) a process of minimizing (v-1) each of one or more explanation losses calculated by referring to each piece of the explanation information for training and its corresponding each of explanation ground truths and (v-2) each of one or more attention losses calculated by referring to each of the attention maps for training and its corresponding each of attention ground truths. Herein, the explanation information for training may be explanation data on situations the objects for training are in on the training images.

Herein, the learning device 2000 may include a memory (not illustrated) for storing instructions to train the explaining module 600 and the self-focused attention module 700 of the behavior prediction device 1000 and a processor (not illustrated) for performing processes of training the explaining module 600 and the self-focused attention module 700 of the behavior prediction device 1000 according to the instructions in the memory.

Specifically, the learning device 2000 may typically achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

The processor of the computing device may include hardware configuration of MPU (Micro Processing Unit) or CPU (Central Processing Unit), cache memory, data bus, etc. Additionally, the computing device may further include software configuration of OS and applications that achieve specific purposes.

However, such description of the computing device does not exclude an integrated device including any combination of a processor, a memory, a medium, or any other computing components for implementing the present disclosure.

Processes of training the explaining module 600 and the self-focused attention module 700 of the behavior prediction device 1000 by using the learning device 2000 configured as such are described by referring to Fig. 8 as follows. In the description below, the part easily deducible from the explanation of Fig. 3 will be omitted.

First, the learning device 2000 may perform or support another device to perform a process of acquiring (1) each of the training images corresponding to each of the frames for training and (2) each piece of the sensing information for training corresponding to each of the frames for training through the video & sensing information acquisition module 100.

And, the learning device 2000 may perform or support another device to perform a process of inputting each of the training images corresponding to each of the frames for training and each piece of the sensing information for training, corresponding to each of the frames for training, into the metadata recognition module 200, to thereby allow the metadata recognition module 200 to output each piece of the metadata for training corresponding to each of the frames for training.

Then, the learning device 2000 may perform or support another device to perform a process of inputting each piece of the metadata for training, corresponding to each of the frames for training, into the feature encoding module 300, to thereby allow the feature encoding module 300 to encode each piece of the metadata for training corresponding to each of the frames for training and thus to output each of the features for training, corresponding to each of the frames for training, to be used for the behavior predictions for training.

Next, the learning device 2000 may perform or support another device to perform a process of inputting each of the training images, each piece of the metadata for training, and each of the features for training, corresponding to each of the frames for training, into the explaining module 600, to thereby allow the explaining module 600 to generate each piece of the explanation information for training on each of the affecting factors for training determined as affecting the behavior prediction for training for each of the frames for training.

Next, the learning device 2000 may perform or support another device to perform a process of inputting each piece of the explanation information for training and each piece of the metadata for training, corresponding to each of the frames for training, into the self-focused attention module 700, to thereby allow the self-focused attention module 700 to analyze each piece of the explanation information for training and each piece of the metadata for training and thus to output each of the attention maps for training corresponding to each of the frames for training. Herein, each of the attention maps for training may be created by marking the areas of interest (AOls) for training, to be used for the behavior predictions for training.

Thereafter, the learning device 2000 may perform or support another device to perform a process of training the explaining module 600 and the self-focused attention module 700 such that (1) each of the explanation losses calculated by referring to each piece of the explanation information for training and its corresponding each of explanation ground truths and (2) each of the attention losses calculated by referring to each of the attention maps for training and its corresponding each of attention ground truths are minimized. Herein, the learning device 2000 may perform or support another device to perform (i) a process of allowing a first loss layer 910 to calculate each of the explanation losses by referring to each piece of the explanation information for training and its corresponding each of the explanation ground truths and (ii) a process of allowing a second loss layer 920 to calculate each of the attention losses by referring to each of the attention maps for training and its corresponding each of attention ground truths.

Meanwhile, the explaining module 600 and the self-focused attention module 700 are described above as trained by using each of the training images and its corresponding each piece of the sensing information for training. However, as another example, training data may be generated, into which each of the training images and its corresponding each piece of the sensing information for training, each piece of the metadata for training, and each of the features for training are incorporated, and the explaining module 600 and the self-focused attention module 700 may be trained using the training data generated as such.

The present disclosure has an effect of allowing information on the affecting factors, determined as affecting the behavior predictions by the behavior prediction network, to be provided to the user.

The present disclosure has another effect of allowing the user to pay attention to the AOIs to be marked when the behavior predictions of an object are performed by the behavior prediction network.

The present disclosure has still another effect of improving a performance of the behavior prediction network efficiently by using the affecting factors determined as affecting the behavior predictions.

The embodiments of the present disclosure as explained above can be implemented in a form of executable program command through a variety of computer means recordable to computer readable media. The computer readable media may include solely or in combination, program commands, data files, and data structures. The program commands recorded to the media may be components specially designed for the present disclosure or may be usable to those skilled in the art. Computer readable media include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands include not only a machine language code made by a complier but also a high level code that can be used by an interpreter etc., which is executed by a computer. The aforementioned hardware device can work as more than a software module to perform the action of the present disclosure and vice versa.

As seen above, the present disclosure has been explained by specific matters such as detailed components, limited embodiments, and drawings. They have been provided only to help more general understanding of the present disclosure.

## Claims

1. A method for predicting trajectories, comprising steps of:
(1) taking a video for testing by a camera mounted on a moving subject;
(2) acquiring sensing information for testing, detected by one or more sensors mounted on the moving subject;
(a) performing the following processes by a trajectory prediction device (1000) or by another device supported by the trajectory prediction device (1000);
(a)(i) a process of inputting each of one or more test images corresponding to each of one or more frames for testing on the video for testing and each piece of the sensing information for testing corresponding to each of the frames for testing into a metadata recognition module (200), to thereby allow the metadata recognition module to apply at least one learned operation to the test images and the sensing information for testing and thus to output each piece of metadata for testing corresponding to each of the frames for testing, and
(a)(ii) a process of inputting the metadata for testing into a feature encoding module (300), to thereby allow the feature encoding module to encode the metadata for testing and thus to output each of features for testing, corresponding to each of the frames for testing;
(b) the trajectory prediction device (1000) performing or supporting another device to perform
(b)(iii) a process of inputting each of the features for testing into a trajectory prediction module (400), to thereby allow the trajectory prediction module to analyze the features for testing and predict each of one or more trajectories of each of one or more objects for testing, through the learned operation, and thus generate each of the trajectory predictions for testing; and
(c)(i) a process of allowing an outputting module (500) to output each of trajectory results for testing, corresponding to each of the trajectory predictions for testing, of each of the objects for testing,
**characterized in that** the method is configured for predicting trajectories using explainable self-focused attention **in that**:
step (b) further comprises:
(b)(i) a process of inputting each of the test images, each piece of the metadata for testing, and each of the features for testing into an explaining module (600), to thereby allow the explaining module to generate each piece of explanation information for testing, corresponding to each of the frames for testing, on each of affecting factors for testing determined as affecting one or more trajectory predictions for testing for each of the frames for testing,
(b)(ii) a process of inputting each of the test images and each piece of the metadata for testing into a self-focused attention module (700), to thereby allow the self-focused attention module to output, through the learned operation, each of attention maps for testing corresponding to each of the frames for testing wherein each of the attention maps for testing is created by marking one or more areas of interest (AOIs) for testing, to be used for the trajectory predictions for testing, on each of the test images,
**in that** the process in step (b)(iii) further comprises inputting each of the attention maps for testing into the trajectory prediction module (400) in addition to inputting each of the features for testing inputting therein, to thereby allow the trajectory prediction module to analyze the features for testing and the attention maps for testing,
and **in that** step (c) further comprises
(c)( ii) a process of allowing a visualization module (800) to visualize and output the affecting factors for testing by marking at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

2. The method of Claim 1, wherein a learning device has trained the explaining module and the self-focused attention module by performing or supporting another device to perform:
(i) a process of inputting each of training images corresponding to each of frames for training and each piece of sensing information for training corresponding to each of the frames for training into the metadata recognition module, to thereby allow the metadata recognition module to output each piece of metadata for training corresponding to each of the frames for training,
(ii) a process of inputting the metadata for training into the feature encoding module, to thereby allow the feature encoding module to encode the metadata for training and thus to output each of features for training, corresponding to each of the frames for training,
(iii) a process of inputting each of the training images, each piece of the metadata for training, and each of the features for training into the explaining module, to thereby allow the explaining module to generate each piece of explanation information for training corresponding to each of the frames for training, on each of affecting factors for training determined as affecting one or more trajectory predictions for training for each of the frames for training,
(iv) a process of inputting each piece of the explanation information for training and each piece of the metadata for training into the self-focused attention module, to thereby allow the self-focused attention module to analyze the explanation information for training and the metadata for training and thus to output each of attention maps for training corresponding to each of the frames for training wherein each of the attention maps for training is created by marking one or more areas of interest for training, to be used for the trajectory predictions for training, corresponding to each of the frames for training, and
(v) a process of minimizing (v-1) each of one or more explanation losses calculated by referring to each piece of the explanation information for training and its corresponding each of explanation ground truths and (v-2) each of one or more attention losses calculated by referring to each of the attention maps for training and its corresponding each of attention ground truths.

3. The method of Claim 1, wherein, at the step of (b), the trajectory prediction device performs or supports another device to perform a process of instructing the explaining module to
(i) reduce dimensions of the test images, the metadata for testing, and the features for testing, to thereby generate each of latent features for testing corresponding to each of the frames for testing, through an encoder of an autoencoder and
(ii) reconstruct each of the latent features for testing and mark each of the affecting factors for testing as the areas of interest for testing, to thereby generate each piece of the explanation information for testing, through a decoder of the autoencoder.

4. The method of Claim 3, wherein, at the step of (c), the trajectory prediction device performs or supports another device to perform a process of instructing the visualization module to mark at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

5. The method of Claim 1, wherein, at the step of (b), the trajectory prediction device performs or supports another device to perform a process of instructing the explaining module to (i) (i-1) apply the learned operation to the test images, the metadata for testing, and the features for testing, to thereby generate each of semantic segmentation images for testing corresponding to each of the frames for testing and (i-2) identify instance-wise areas of interest on the semantic segmentation images for testing, through the autoencoder, and (ii) generate each of explanation images for testing, corresponding to each of the frames for testing, where the affecting factors for testing are marked by referring to results of said (i-2).

6. The method of Claim 1, wherein, at the step of (b), the trajectory prediction device performs or supports another device to perform a process of instructing the explaining module to apply the learned operation to the metadata for testing, to thereby generate decision trees for testing based on the metadata for testing related to all of the objects for testing on the test images.

7. The method of Claim 6, wherein, at the step of (c), the trajectory prediction device performs or supports another device to perform a process of instructing the visualization module to output state information on at least one target object, determined as affecting the trajectory predictions for testing in each of the frames for testing, by referring to the decision trees for testing and the explanation information for testing.

8. The method of Claim 1, wherein, at the step of (a), the trajectory prediction device performs or supports another device to perform a process of inputting the test images and the sensing information for testing into the metadata recognition module, to thereby allow the metadata recognition module to (1) detect environment information on surroundings of the moving subject through a perception module and (2) detect position information on the moving subject through a localization and mapping module.

9. The method of Claim 1, wherein each piece of the metadata for testing includes each of object bounding boxes corresponding to each of the objects for testing, each piece of pose information on the moving subject, and each piece of map information corresponding to a location of the moving subject.

10. The method of Claim 1, wherein the trajectory prediction module includes an RNN (Recurrent Neural Network) which adopts at least one of an LSTM (Long Short-Term Memory) algorithm and an LSTM-GAN (Generative Adversarial Network) algorithm.

11. A trajectory prediction device (1000) for predicting trajectories, installed on a moving subject, the device comprising:
a camera mounted on the moving subject;
one or more sensors mounted on the moving subject;
at least one memory (1001) that stores instructions; and
at least one processor (1002) configured to execute the instructions to perform or support another device to perform the following processes:
(I)(i) a process of inputting each of one or more test images corresponding to each of one or more frames for testing on the video for testing taken by the camera and each piece of the sensing information for testing, detected while the subject is moving corresponding to each of the frames for testing into a metadata recognition module (200), to thereby allow the metadata recognition module to apply at least one learned operation to the test images and the sensing information for testing and thus to output each piece of metadata for testing corresponding to each of the frames for testing, and
(I)(ii) a process of inputting the metadata for testing into a feature encoding module (300), to thereby allow the feature encoding module to encode the metadata for testing and thus to output each of features for testing, corresponding to each of the frames for testing,
(II) (iii) a process of inputting each of the features for testing into a trajectory prediction module (400), to thereby allow the trajectory prediction module to analyze the features for testing and predict each of one or more trajectories of each of one or more objects for testing, through the learned operation, and thus generate each of the trajectory predictions for testing, and
(III) (i) a process of allowing an outputting module (500) to output each of trajectory results for testing, corresponding to each of the trajectory predictions for testing, of each of the objects for testing;
**characterized in that** the trajectory prediction device (1000) is configured for predicting trajectories using explainable self-focused attention, **in that** at the process of (II), the processor performs or supports another device to further perform
(II)(i) a process of inputting each of the test images, each piece of the metadata for testing, and each of the features for testing into an explaining module (600), to thereby allow the explaining module to generate each piece of explanation information for testing, corresponding to each of the frames for testing, on each of affecting factors for testing determined as affecting one or more trajectory predictions for testing for each of the frames for testing,
(II)(ii) a process of inputting each of the test images and each piece of the metadata for testing into a self-focused attention module (700), to thereby allow the self-focused attention module to output, through the learned operation, each of attention maps for testing corresponding to each of the frames for testing wherein each of the attention maps for testing is created by marking one or more areas of interest (AOIs) for testing, to be used for the trajectory predictions for testing, on each of the test images,
**in that** the process of (II)(iii) further comprises inputting each of the attention maps for testing into the trajectory prediction module (400) in addition to inputting each of the features for testing inputting therein, to thereby allow the trajectory prediction module to analyze the features for testing and the attention maps for testing,
and **in that** the process of (III) further comprises
(III)(ii) a process of allowing a visualization module (800) to visualize and output the affecting factors for testing by marking at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

12. The trajectory prediction device of Claim 11, wherein a learning device has trained the explaining module and the self-focused attention module by performing or supporting another device to perform:
(i) a process of inputting each of training images corresponding to each of frames for training and each piece of sensing information for training corresponding to each of the frames for training into the metadata recognition module, to thereby allow the metadata recognition module to output each piece of metadata for training corresponding to each of the frames for training,
(ii) a process of inputting the metadata for training into the feature encoding module, to thereby allow the feature encoding module to encode the metadata for training and thus to output each of features for training, corresponding to each of the frames for training,
(iii) a process of inputting each of the training images, each piece of the metadata for training, and each of the features for training into the explaining module, to thereby allow the explaining module to generate each piece of explanation information for training corresponding to each of the frames for training, on each of affecting factors for training determined as affecting one or more trajectory predictions for training for each of the frames for training,
(iv) a process of inputting each piece of the explanation information for training and each piece of the metadata for training into the self-focused attention module, to thereby allow the self-focused attention module to analyze the explanation information for training and the metadata for training and thus to output each of attention maps for training corresponding to each of the frames for training wherein each of the attention maps for training is created by marking one or more areas of interest for training, to be used for the trajectory predictions for training, corresponding to each of the frames for training, and
(v) a process of minimizing (v-1) each of one or more explanation losses calculated by referring to each piece of the explanation information for training and its corresponding each of explanation ground truths and (v-2) each of one or more attention losses calculated by referring to each of the attention maps for training and its corresponding each of attention ground truths.

13. The trajectory prediction device of Claim 11, wherein, at the process of (II), the processor performs or supports another device to perform a process of instructing the explaining module to (i) reduce dimensions of the test images, the metadata for testing, and the features for testing, to thereby generate each of latent features for testing corresponding to each of the frames for testing, through an encoder of an autoencoder and (ii) reconstruct each of the latent features for testing and mark each of the affecting factors for testing as the areas of interest for testing, to thereby generate each piece of the explanation information for testing, through a decoder of the autoencoder.

14. The trajectory prediction device of Claim 13, wherein, at the process of (III), the processor performs or supports another device to perform a process of instructing the visualization module to mark at least one target object as one of the areas of interest for testing on each of the test images and to output each of the marked test images, by referring to the trajectory predictions for testing and the explanation information for testing, wherein the target object is determined as affecting the trajectory predictions for testing in each of the frames for testing.

15. The trajectory prediction device of Claim 11, wherein, at the process of (II), the processor performs or supports another device to perform a process of instructing the explaining module to (i) (i-1) apply the learned operation to the test images, the metadata for testing, and the features for testing, to thereby generate each of semantic segmentation images for testing corresponding to each of the frames for testing and (i-2) identify instance-wise areas of interest on the semantic segmentation images for testing, through the autoencoder, and (ii) generate each of explanation images for testing, corresponding to each of the frames for testing, where the affecting factors for testing are marked by referring to results of said (i-2).

## Patentansprüche

1. Verfahren zum Vorhersagen von Trajektorien, umfassend die folgenden Schritte:
(1) Aufnehmen eines Videos zu Testzwecken durch eine Kamera, die an einem sich bewegenden Subjekt angebracht ist;
(2) Gewinnen von Sensordateninformationen zu Testzwecken, die von einem oder mehreren Sensoren erfasst werden, die an dem sich bewegenden angebracht sind;
(a) Durchführen der folgenden Prozesse durch eine Trajektorien-Vorhersagevorrichtung (1000) oder durch eine andere Vorrichtung, die von der Trajektorien-Vorhersagevorrichtung (1000) unterstützt wird;
(a)(i) einen Prozess des Eingebens jedes von einem oder mehreren Einzelbildern zu Testzwecken auf dem Video zu Testzwecken und jedes Teilstücks der Sensordateninformationen zu Testzwecken, die jedem der Einzelbilder zu Testzwecken entsprechen, in ein Metadaten-Erkennungsmodul (200), um dadurch dem Metadaten-Erkennungsmodul zu ermöglichen, mindestens eine gelernte Operation auf die Testbilder und die Sensordateninformationen zu Testzwecken anzuwenden und somit jedes Teilstück der Metadaten zu Testzwecken auszugeben, das jedem der Einzelbilder zu Testzwecken entspricht, und
(a)(ii) einen Prozess des Eingebens der Metadaten zu Testzwecken in ein Merkmal-Codierungsmodul (300), um dadurch dem Merkmal-Codierungsmodul zu ermöglichen, die Metadaten zu Testzwecken zu codieren und somit jedes der Merkmale zu Testzwecken auszugeben, die jedem der Einzelbilder zu Testzwecken entsprechen;
(b) wobei die Trajektorien-Vorhersagevorrichtung (1000) eine andere Vorrichtung durchführt oder unterstützt, um
(b)(iii) einen Prozess des Eingebens jedes der Merkmale zu Testzwecken in ein Trajektorien-Vorhersagemodul (400) durchzuführen, um dadurch dem Trajektorien-Vorhersagemodul zu ermöglichen, die Merkmale zu Testzwecken zu analysieren und jede von einer oder mehreren Trajektorien von jedem von einem oder mehreren Objekten zu Testzwecken durch die gelernte Operation vorherzusagen und somit jede der Trajektorien-Vorhersagen zu Testzwecken zu erzeugen; und
(c)(i) einen Prozess, der es einem Ausgabemodul (500) ermöglicht, jedes der Trajektorienergebnisse zu Testzwecken, die jeder der Trajektorien-Vorhersagen zu Testzwecken entsprechen, von jedem der Objekte zu Testzwecken auszugeben,
**dadurch gekennzeichnet, dass** das Verfahren zum Vorhersagen von Trajektorien unter Verwendung erklärbarer selbstfokussierter Aufmerksamkeit konfiguriert ist, **dadurch gekennzeichnet, dass**:
Schritt (b) ferner umfasst:
(b)(i) einen Prozess des Eingebens jedes der Testbilder, jedes Teilstücks der Metadaten zu Testzwecken und jedes der Merkmale zu Testzwecken in ein Erklärungsmodul (600), um dadurch dem Erklärungsmodul zu ermöglichen, jedes Teilstück der Erklärungsinformationen zu Testzwecken, die jedem der Einzelbilder zu Testzwecken entsprechen, über jeden der beeinflussenden Faktoren zu Testzwecken zu erzeugen, die als eine oder mehrere Trajektorien-Vorhersagen zu Testzwecken für jedes der Einzelbilder zu Testzwecken beeinflussend bestimmt wurden,
(b)(ii) einen Prozess des Eingebens jedes der Testbilder und jedes Teilstücks der Metadaten zu Testzwecken in ein selbstfokussiertes Aufmerksamkeitsmodul (700), um dadurch dem selbstfokussierten Aufmerksamkeitsmodul zu ermöglichen, durch die gelernte Operation jede der Aufmerksamkeitskarten zu Testzwecken auszugeben, die jedem der Einzelbilder zu Testzwecken entsprechen, wobei jede der Aufmerksamkeitskarten zu Testzwecken durch Markieren eines oder mehrerer Bereiche von Interesse (AOIs) zu Testzwecken, die für die Trajektorien-Vorhersagen zu Testzwecken verwendet werden sollen, auf jedem der Testbilder erzeugt wird,
**dadurch gekennzeichnet, dass** der Prozess in Schritt (b)(iii) ferner das Eingeben jeder der Aufmerksamkeitskarten zu Testzwecken in das Trajektorien-Vorhersagemodul (400) zusätzlich zum Eingeben jedes der Merkmale zu Testzwecken darin umfasst, um dadurch dem Trajektorien-Vorhersagemodul zu ermöglichen, die Merkmale zu Testzwecken und die Aufmerksamkeitskarten zu Testzwecken zu analysieren,
und dass der Schritt (c) ferner umfasst:
(c)(ii) einen Prozess, der es einem Visualisierungsmodul (800) ermöglicht, die beeinflussenden Faktoren zu Testzwecken zu visualisieren und auszugeben, indem mindestens ein Zielobjekt als einer der Bereiche von Interesse zu Testzwecken auf jedem der Testbilder markiert wird, und jedes der markierten Testbilder auszugeben, und zwar durch Bezugnahme auf die Trajektorien-Vorhersagen zu Testzwecken und die Erklärungsinformationen zu Testzwecken, wobei das Zielobjekt als die Trajektorien-Vorhersagen zu Testzwecken in jedem der Einzelbilder zu Testzwecken beeinflussend bestimmt wird.

2. Verfahren nach Anspruch 1, wobei eine lernende Vorrichtung das Erklärungsmodul und das selbstfokussierte Aufmerksamkeitsmodul trainiert hat, und zwar durch Durchführen oder Unterstützen einer anderen Vorrichtung beim Durchführen:
(i) eines Prozesses des Eingebens jedes der Trainingsbilder, die jedem der Einzelbilder für das Training entsprechen, und jedes Teilstücks der Sensordateninformationen für das Training, die jedem der Einzelbilder für das Training entsprechen, in das Metadaten-Erkennungsmodul, um dadurch dem Metadaten-Erkennungsmodul zu ermöglichen, jedes Teilstück der Metadaten für das Training auszugeben, das jedem der Einzelbilder für das Training entspricht,
(ii) eines Prozesses des Eingebens der Metadaten für das Training in das Merkmalcodierungsmodul, um dadurch dem Merkmalcodierungsmodul zu ermöglichen, die Metadaten für das Training zu codieren und somit jedes der Merkmale für das Training auszugeben, das jedem der Einzelbilder für das Training entspricht,
(iii) eines Prozesses des Eingebens jedes der Trainingsbilder, jedes Teilstücks der Metadaten für das Training und jedes der Merkmale für das Training in das Erklärungsmodul, um dadurch dem Erklärungsmodul zu ermöglichen, jede Erklärungsinformation für das Training zu erzeugen, die jedem der Einzelbilder für das Training entspricht, und zwar für jeden der beeinflussenden Faktoren für das Training, die als Einfluss auf eine oder mehrere Trajektorien-Vorhersagen für das Training für jedes der Einzelbilder für das Training bestimmt wurden,
(iv) eines Prozesses des Eingebens jedes Teilstücks der Erklärungsinformationen für das Training und jedes Teilstücks der Metadaten für das Training in das selbstfokussierte Aufmerksamkeitsmodul, um dadurch dem selbstfokussierten Aufmerksamkeitsmodul zu ermöglichen, die Erklärungsinformationen für das Training und die Metadaten für das Training zu analysieren und somit jede der Aufmerksamkeitskarten für das Training auszugeben, die jedem der Einzelbilder für das Training entsprechen, wobei jede der Aufmerksamkeitskarten für das Training durch Markieren eines oder mehrerer Bereiche von Interesse für das Training erzeugt wird, die für die Trajektorien-Vorhersagen für das Training verwendet werden sollen, die jedem der Einzelbilder für das Training entsprechen, und
(v) eines Prozesses des Minimierens (v-1) jedes von einem oder mehreren Erklärungsverlusten, die berechnet werden durch Bezugnahme auf jedes Teilstück der Erklärungsinformationen für das Training und ihre entsprechenden Erklärungsgrundwahrheiten, und (v-2) jedes von einem oder mehreren Aufmerksamkeitsverlusten, die berechnet werden durch Bezugnahme auf jede der Aufmerksamkeitskarten für das Training und ihre entsprechenden Aufmerksamkeitsgrundwahrheiten.

3. Verfahren nach Anspruch 1, wobei im Schritt (b) die Trajektorien-Vorhersagevorrichtung einen Prozess durchführt oder eine andere Vorrichtung dabei unterstützt, einen Prozess durchzuführen, bei dem das Erklärungsmodul zu Folgendem angewiesen wird:
(i) Reduzieren der Dimensionen der Testbilder, der Metadaten zu Testzwecken und der Merkmale zu Testzwecken, um dadurch jedes der latenten Merkmale zu Testzwecken zu erzeugen, das jedem der Einzelbilder zu Testzwecken entspricht, und zwar durch einen Codierer eines Auto-Codierers und
(ii) Rekonstruieren jedes der latenten Merkmale zu Testzwecken und Markieren jedes der beeinflussenden Faktoren zu Testzwecken als die Bereiche von Interesse zu Testzwecken, um dadurch jedes Teilstück der Erklärungsinformation zu Testzwecken zu erzeugen, und zwar durch einen Decodierer des Auto-Codierers.

4. Verfahren nach Anspruch 3, wobei im Schritt (c) die Trajektorien-Vorhersagevorrichtung einen Prozess durchführt oder eine andere Vorrichtung unterstützt, einen Prozess durchzuführen, bei dem das Visualisierungsmodul zu Folgendem angewiesen wird: Markieren mindestens eines Zielobjekts als einen der Bereiche von Interesse zu Testzwecken auf jedem der Testbilder und Ausgeben jedes der markierten Testbilder, und zwar durch Bezugnahme auf die Trajektorien-Vorhersagen zu Testzwecken und die Erklärungsinformationen zu Testzwecken, wobei das Zielobjekt als die Trajektorien-Vorhersagen zu Testzwecken in jedem der Einzelbilder zu Testzwecken beeinflussend bestimmt wird.

5. Verfahren nach Anspruch 1, wobei im Schritt (b) die Trajektorien-Vorhersagevorrichtung einen Prozess durchführt oder eine andere Vorrichtung dabei unterstützt, einen Prozess durchzuführen, bei dem das Erklärungsmodul zu Folgendem angewiesen wird: (i)(i-1) Anwenden der gelernten Operation auf die Testbilder, die Metadaten zu Testzwecken und die Merkmale zu Testzwecken, um dadurch jedes der semantischen Segmentierungsbilder zu Testzwecken zu erzeugen, die jedem der Einzelbilder zu Testzwecken entsprechen, und (i-2) Identifizieren instanzweiser Bereiche von Interesse auf den semantischen Segmentierungsbildern zu Testzwecken durch den Auto-Codierer, und (ii) Erzeugen jedes der Erklärungsbilder zu Testzwecken, die jedem der Einzelbilder zu Testzwecken entsprechen, wobei die beeinflussenden Faktoren zu Testzwecken durch Bezugnahme auf die Ergebnisse von (i-2) markiert werden.

6. Verfahren nach Anspruch 1, wobei im Schritt (b) die Trajektorien-Vorhersagevorrichtung einen Prozess durchführt oder eine andere Vorrichtung dabei unterstützt, einen Prozess durchzuführen, bei dem das Erklärungsmodul zu Folgendem angewiesen wird: Anwenden der gelernten Operation auf die Metadaten zu Testzwecken, um dadurch Entscheidungsbäume zu Testzwecken auf der Grundlage der Metadaten zu Testzwecken zu erzeugen, die sich auf alle Objekte zu Testzwecken auf den Testbildern beziehen.

7. Verfahren nach Anspruch 6, wobei im Schritt (c) die Trajektorien-Vorhersagevorrichtung einen Prozess durchführt oder eine andere Vorrichtung dabei unterstützt, einen Prozess durchzuführen, bei dem das Visualisierungsmodul zu Folgendem angewiesen wird: Ausgeben von Zustandsinformationen über mindestens ein Zielobjekt, das als die Trajektorien-Vorhersagen zu Testzwecken beeinflussend in jedem der Einzelbilder zu Testzwecken bestimmt wurde, und zwar durch Bezugnahme auf die Entscheidungsbäume zu Testzwecken und die Erklärungsinformationen zu Testzwecken.

8. Verfahren nach Anspruch 1, wobei im Schritt (a) die Trajektorien-Vorhersagevorrichtung einen Prozess durchführt oder eine andere Vorrichtung dabei unterstützt, einen Prozess des Eingebens der Testbilder und der Sensordateninformationen zu Testzwecken in das Metadaten-Erkennungsmodul durchzuführen, um dadurch das Metadaten-Erkennungsmodul zu Folgendem zu befähigen: (1) Erfassen von Umgebungsinformationen über die Umgebung des sich bewegenden Subjekts durch ein Wahrnehmungsmodul und (2) Erfassen von Positionsinformationen über das sich bewegende Subjekt durch ein Lokalisierungs- und Kartierungsmodul.

9. Verfahren nach Anspruch 1, wobei jedes Teilstück der Metadaten zu Testzwecken jedes der Objektbegrenzungsfelder, die jedem der Objekte zu Testzwecken entsprechen, jedes Teilstück der Poseninformationen über das sich bewegende Subjekt und jedes Teilstück der Karteninformationen, die einem Standort des sich bewegenden Subjekts entsprechen, einschließt.

10. Verfahren nach Anspruch 1, wobei das Trajektorien-Vorhersagemodul ein RNN (Recurrent Neural Network) einschließt, das mindestens einen LSTM (Long Short-Term Memory) -Algorithmus oder einen LSTM-GAN (Generative Adversarial Network) -Algorithmus verwendet.

11. Trajektorien-Vorhersagevorrichtung (1000) zur Vorhersage von Trajektorien, die an einem sich bewegenden Subjekt installiert ist, wobei die Vorrichtung Folgendes umfasst:
eine Kamera, die an dem sich bewegenden Subjekt angebracht ist;
einen oder mehrere Sensoren, die an dem sich bewegenden Subjekt angebracht sind;
mindestens einen Speicher (1001), der Anweisungen speichert; und
mindestens einen Prozessor (1002), der konfiguriert ist, die Anweisungen auszuführen, um die folgenden Prozesse durchzuführen oder eine andere Vorrichtung bei deren Durchführung zu unterstützen:
(I)(i) einen Prozess des Eingebens jedes von einem oder mehreren Testbildern, die jedem von einem oder mehreren Einzelbildern zu Testzwecken auf dem Video zu Testzwecken entsprechen, das von der Kamera aufgenommen wurde, und jedes Teilstücks der Sensordateninformationen zu Testzwecken, die erfasst wurden, während sich das Subjekt entsprechend jedem der Einzelbilder zu Testzwecken bewegt, in ein Metadaten-Erkennungsmodul (200), um dadurch dem Metadaten-Erkennungsmodul zu ermöglichen, mindestens eine gelernte Operation auf die Testbilder und die Sensordateninformationen zu Testzwecken anzuwenden und somit jedes Teilstück der Metadaten zu Testzwecken auszugeben, die jedem der Einzelbilder zu Testzwecken entsprechen, und
(I)(ii) einen Prozess des Eingebens der Metadaten zu Testzwecken in ein Merkmalcodierungsmodul (300), um dadurch dem Merkmalcodierungsmodul zu ermöglichen, die Metadaten zu Testzwecken zu codieren und somit jedes der Merkmale zu Testzwecken auszugeben, die jedem der Einzelbilder zu Testzwecken entsprechen,
(II)(iii) einen Prozess des Eingebens jedes der Merkmale zu Testzwecken in ein Trajektorien-Vorhersagemodul (400), um dadurch dem Trajektorien-Vorhersagemodul zu ermöglichen, die Merkmale zu Testzwecken zu analysieren und jede von einer oder mehreren Trajektorien von jedem von einem oder mehreren Objekten zu Testzwecken durch die gelernte Operation vorherzusagen, und somit jede der Trajektorien-Vorhersagen zu Testzwecken zu erzeugen, und
(III)(i)einen Prozess, bei dem es einem Ausgabemodul (500) ermöglicht wird, jedes der Trajektorienergebnisse zu Testzwecken, die jeder der Trajektorien-Vorhersagen zu Testzwecken entsprechen, von jedem der Objekte zu Testzwecken auszugeben;
**dadurch gekennzeichnet, dass** die Trajektorien-Vorhersagevorrichtung (1000) zum Vorhersagen von Trajektorien konfiguriert ist, und zwar unter Verwendung von erklärbarer selbstfokussierter Aufmerksamkeit, dass im Prozess (II) der Prozessor eine andere Vorrichtung durchführt oder dabei unterstützt, ferner Folgendes durchzuführen:
(II)(i) einen Prozess des Eingebens jedes der Testbilder, jedes Teilstück der Metadaten zu Testzwecken und jedes der Merkmale zu Testzwecken in ein Erklärungsmodul (600), um dadurch dem Erklärungsmodul zu ermöglichen, jedes Teilstück der Erklärungsinformationen zu Testzwecken, die jedem der Einzelbilder zu Testzwecken entsprechen, über jeden der beeinflussenden Faktoren zu Testzwecken zu erzeugen, die als eine oder mehrere Trajektorien-Vorhersagen zu Testzwecken für jedes der Einzelbilder zu Testzwecken beeinflussend bestimmt wurden,
(II)(ii) einen Prozess des Eingebens jedes der Testbilder und jedes Teilstücks der Metadaten zu Testzwecken in ein selbstfokussiertes Aufmerksamkeitsmodul (700), um dadurch dem selbstfokussierten Aufmerksamkeitsmodul zu ermöglichen, durch die gelernte Operation jede der Aufmerksamkeitskarten zu Testzwecken auszugeben, die jedem der Einzelbilder zu Testzwecken entsprechen, wobei jede der Aufmerksamkeitskarten zu Testzwecken durch Markieren eines oder mehrerer Bereiche von Interesse (AOIs) zu Testzwecken, die für die Trajektorien-Vorhersagen zu Testzwecken verwendet werden sollen, auf jedem der Testbilder erzeugt wird,
**dadurch gekennzeichnet, dass** der Prozess (II)(iii) ferner das Eingeben jeder der Aufmerksamkeitskarten zu Testzwecken in das Trajektorien-Vorhersagemodul (400) zusätzlich zum Eingeben jedes der Merkmale zu Testzwecken darin umfasst, um dadurch dem Trajektorien-Vorhersagemodul zu ermöglichen, die Merkmale zu Testzwecken und die Aufmerksamkeitskarten zu Testzwecken zu analysieren,
und dass der Prozess (III) ferner Folgendes umfasst:
(III)(ii) einen Prozess, der es einem Visualisierungsmodul (800) ermöglicht, die beeinflussenden Faktoren zu Testzwecken zu visualisieren und auszugeben, indem mindestens ein Zielobjekt als einer der Bereiche von Interesse zu Testzwecken auf jedem der Testbilder markiert wird, und jedes der markierten Testbilder auszugeben, und zwar durch Bezugnahme auf die Trajektorien-Vorhersagen zu Testzwecken und die Erklärungsinformationen zu Testzwecken, wobei das Zielobjekt als die Trajektorien-Vorhersagen zu Testzwecken in jedem der Einzelbilder zu Testzwecken beeinflussend bestimmt wird.

12. Trajektorien-Vorhersagevorrichtung nach Anspruch 11, wobei eine lernende Vorrichtung das Erklärungsmodul und das selbstfokussierte Aufmerksamkeitsmodul trainiert hat, und zwar durch Durchführen oder Unterstützen einer anderen Vorrichtung beim Durchführen:
(i) eines Prozesses des Eingebens jedes der Trainingsbilder, die jedem der Einzelbilder für das Training entsprechen, und jedes Teilstücks der Sensordateninformationen für das Training, die jedem der Einzelbilder für das Training entsprechen, in das Metadaten-Erkennungsmodul, um dadurch dem Metadaten-Erkennungsmodul zu ermöglichen, jedes Teilstück der Metadaten für das Training auszugeben, das jedem der Einzelbilder für das Training entspricht,
(ii) eines Prozesses des Eingebens der Metadaten für das Training in das Merkmalcodierungsmodul, um dadurch dem Merkmalcodierungsmodul zu ermöglichen, die Metadaten für das Training zu codieren und somit jedes der Merkmale für das Training auszugeben, das jedem der Einzelbilder für das Training entspricht,
(iii) eines Prozesses des Eingebens jedes der Trainingsbilder, jedes Teilstücks der Metadaten für das Training und jedes der Merkmale für das Training in das Erklärungsmodul, um dadurch dem Erklärungsmodul zu ermöglichen, jedes Teilstück der Erklärungsinformationen für das Training zu erzeugen, das jedem der Einzelbilder für das Training entspricht, und zwar für jeden der beeinflussenden Faktoren für das Training, die als eine oder mehrere Trajektorien-Vorhersagen für das Training für jedes der Einzelbilder für das Training bestimmend wurden,
(iv) eines Prozesses des Eingebens jedes Teilstücks der Erklärungsinformationen für das Training und jedes Teilstücks der Metadaten für das Training in das selbstfokussierte Aufmerksamkeitsmodul, um dadurch dem selbstfokussierten Aufmerksamkeitsmodul zu ermöglichen, die Erklärungsinformationen für das Training und die Metadaten für das Training zu analysieren und somit jede der Aufmerksamkeitskarten für das Training auszugeben, die jedem der Einzelbilder für das Training entsprechen, wobei jede der Aufmerksamkeitskarten für das Training durch Markieren eines oder mehrerer Bereiche von Interesse für das Training erzeugt wird, die für die Trajektorien-Vorhersagen für das Training verwendet werden sollen, die jedem der Einzelbilder für das Training entsprechen, und
(v) eines Prozesses des Minimierens (v-1) jedes von einem oder mehreren Erklärungsverlusten, die berechnet werden durch Bezugnahme auf jedes Teilstück der Erklärungsinformationen für das Training und ihre entsprechenden Erklärungsgrundwahrheiten, und (v-2) jedes von einem oder mehreren Aufmerksamkeitsverlusten, die berechnet werden durch Bezugnahme auf jede der Aufmerksamkeitskarten für das Training und ihre entsprechenden Aufmerksamkeitsgrundwahrheiten.

13. Trajektorien-Vorhersagevorrichtung nach Anspruch 11, wobei bei dem Prozess (II) der Prozessor einen Prozess durchführt oder eine andere Vorrichtung unterstützt, um einen Prozess durchzuführen, bei dem das Erklärungsmodul zu Folgendem angewiesen wird: (i) Reduzieren der Abmessungen der Testbilder, der Metadaten zu Testzwecken und der Merkmale zu Testzwecken, um dadurch jedes der latenten Merkmale zu Testzwecken zu erzeugen, das jedem der Einzelbilder zu Testzwecken entspricht, und zwar durch einen Codierer oder einen Auto-Codierer und (ii) Rekonstruieren jedes der latenten Merkmale zu Testzwecken und Markieren jedes der beeinflussenden Faktoren zu Testzwecken als die Bereiche von Interesse zu Testzwecken, um dadurch jedes Teilstück der Erklärungsinformation zu Testzwecken durch einen Decodierer des Auto-Codierers zu erzeugen.

14. Trajektorien-Vorhersagevorrichtung nach Anspruch 13, wobei bei dem Prozess (III) der Prozessor einen Prozess durchführt oder eine andere Vorrichtung unterstützt, um einen Prozess durchzuführen, bei dem das Visualisierungsmodul zu Folgendem angewiesen wird: Markieren mindestens eines Zielobjekts als einen der zu prüfenden Bereiche auf jedem der Testbilder und Ausgeben jedes der markierten Testbilder, und zwar durch Bezugnahme auf die Trajektorien-Vorhersagen zu Testzwecken und die Erklärungsinformationen zu Testzwecken, wobei das Zielobjekt als die Trajektorien-Vorhersagen zu Testzwecken in jedem der Einzelbilder zu Testzwecken beeinflussend bestimmt wird.

15. Trajektorien-Vorhersagevorrichtung nach Anspruch 11, wobei im Prozess (II) der Prozessor einen Prozess durchführt oder eine andere Vorrichtung dabei unterstützt, einen Prozess durchzuführen, bei dem das Erklärungsmodul zu Folgendem angewiesen wird: (i)(i-1) Anwenden der gelernten Operation auf die Testbilder, die Metadaten zu Testzwecken und die Merkmale zu Testzwecken, um dadurch jedes der semantischen Segmentierungsbilder zu Testzwecken zu erzeugen, die jedem der Einzelbilder zu Testzwecken entsprechen, und (i-2) Identifizieren instanzweiser Bereiche von Interesse auf den semantischen Segmentierungsbildern zu Testzwecken durch den Auto-Codierer, und (ii) Erzeugen jedes der Erklärungsbilder zu Testzwecken, die jedem der Einzelbilder zu Testzwecken entsprechen, wobei die beeinflussenden Faktoren zu Testzwecken durch Bezugnahme auf die Ergebnisse von (i-2) markiert werden.

## Revendications

1. Procédé de prédiction de trajectoires, comprenant les étapes comprenant le fait de :
(1) prendre une vidéo à tester par une caméra montée sur un sujet en mouvement ;
(2) acquérir des informations de détection à tester, détectées par un ou plusieurs capteurs montés sur le sujet en mouvement ;
(a) effectuer les processus suivants par le biais d'un dispositif de prédiction de trajectoires (1000) ou par le biais d'un autre dispositif pris en charge par le dispositif de prédiction de trajectoires (1000) ;
(a)(i) un processus consistant à appliquer en entrée chacune d'une ou plusieurs images de test correspondant à chacune d'une ou plusieurs trames à tester sur la vidéo à tester et chaque élément des informations de détection à tester correspondant à chacune des trames à tester dans un module de reconnaissance de métadonnées (200), pour permettre ainsi au module de reconnaissance de métadonnées d'appliquer au moins une opération apprise aux images de test et aux informations de détection à tester et par conséquent de fournir en sortie chaque élément de métadonnées à tester correspondant à chacune des trames à tester, et
(a)(ii) un processus consistant à appliquer en entrée les métadonnées à tester dans un module de codage de caractéristiques (300), pour permettre ainsi au module de codage de caractéristiques de coder les métadonnées à tester et par conséquent de fournir en sortie chacune des caractéristiques à tester correspondant à chacune des trames à tester;
(b) le dispositif de prédiction de trajectoires (1000) effectuant ou prenant ne charge un autre dispositif pour effectuer
(b)(iii) un processus consistant à appliquer en entrée chacune des caractéristiques à tester dans un module de prédiction de trajectoires (400), pour permettre ainsi au module de prédiction de trajectoires d'analyser les caractéristiques à tester et de prédire chacune d'une ou plusieurs trajectoires d'un ou plusieurs objets à tester, par le biais de l'opération apprise, et de générer par conséquent chacune des prédictions de trajectoires à tester ; et (c)(i) un processus consistant à permettre à un module de fourniture en sortie (500) de fournir en sortie chacun parmi des résultats de trajectoires à tester, correspondant à chacune des prédictions de trajectoires à tester, de chacun des objets à tester,
**caractérisé en ce que** le procédé est configuré pour prédire les trajectoires en utilisant une attention auto-focalisée explicative, et **en ce que** : l'étape (b) comprend en outre :
(b)(i) un processus consistant à appliquer en entrée chacune des images de test, chaque élément des métadonnées à tester et chacune des caractéristiques à tester dans un module d'explication (600), pour permettre ainsi au module d'explication de générer chaque élément d'informations d'explication à tester, correspondant à chacune des trames à tester, sur chacun parmi des facteurs affectant à tester déterminés comme affectant une ou plusieurs prédictions de trajectoires à tester pour chacune des trames à tester,
(b)(ii) un processus consistant à appliquer en entrée chacune des images de test et chaque élément des métadonnées à tester dans un module d'attention auto-focalisée (700), pour permettre ainsi au module d'attention auto-focalisée de fournir en sortie, par le biais de l'opération apprise, chacune parmi des cartes d'attention à tester correspondant à chacune des trames à tester, dans lesquelles chacune des cartes d'attention à tester est créée en marquant une ou plusieurs zones d'intérêt (AOI) à tester, à utiliser pour les prédictions de trajectoires à tester, sur chacune des images de test,
**en ce que** le processus de l'étape (b)(iii) comprend en outre le fait d'appliquer en entrée chacune des cartes d'attention à tester dans le module de prédiction de trajectoires (400) en plus d'appliquer en entrée chacune des caractéristiques à tester, pour permettre ainsi au module de prédiction de trajectoires d'analyser les caractéristiques à tester et les cartes d'attention à tester,
et **en ce que** l'étape (c) comprend en outre
(c)(ii) un processus consistant à permettre à un module de visualisation (800) de visualiser et de fournir en sortie les facteurs affectant à tester en marquant au moins un objet cible en tant que l'une des zones d'intérêt à tester sur chacune des images de test, et de fournir en sortie chacune des images de test marquées, en se référant aux prédictions de trajectoires à tester et aux informations d'explication à tester, dans lequel l'objet cible est déterminé comme affectant les prédictions de trajectoires à tester dans chacune des trames à tester.

2. Procédé selon la revendication 1, dans lequel un dispositif d'apprentissage a entraîné le module d'explication et le module d'attention auto-focalisée en effectuant, ou en prenant en charge un autre dispositif pour effectuer :
(i) un processus consistant à appliquer en entrée chacune parmi des images d'entraînement correspondant à chacune parmi des trames à entraîner et chaque élément d'informations de détection à entraîner correspondant à chacune des trames à entraîner, dans le module de reconnaissance de métadonnées, pour permettre ainsi au module de reconnaissance de métadonnées de fournir en sortie chaque élément de métadonnées à entraîner correspondant à chacune des trames à entraîner,
(ii) un processus consistant à appliquer en entrée les métadonnées à entraîner dans le module de codage de caractéristiques, pour permettre ainsi au module de codage de caractéristiques de coder les métadonnées à entraîner et par conséquent de fournir en sortie chacune parmi des caractéristiques à entraîner, correspondant à chacune des trames à entraîner,
(iii) un processus consistant à appliquer en entrée chacune des images d'entraînement, chaque élément des métadonnées à entraîner, et chacune des caractéristiques à entraîner, dans le module d'explication, pour permettre ainsi au module d'explication de générer chaque élément d'informations d'explication à entraîner correspondant à chacune des trames à entraîner, sur chacun parmi des facteurs affectant à entraîner déterminés comme affectant une ou plusieurs prédictions de trajectoires à entraîner pour chacune des trames à entraîner,
(iv) un processus consistant à appliquer en entrée chaque élément des informations d'explication à entraîner et chaque élément des métadonnées à entraîner, dans le module d'attention auto-focalisée, pour permettre ainsi au module d'attention auto-focalisée d'analyser les informations d'explication à entraîner et les métadonnées à entraîner, et par conséquent de fournir en sortie chacune parmi des cartes d'attention à entraîner correspondant à chacune des trames à entraîner, dans lesquelles chacune des cartes d'attention à entraîner est créée en marquant une ou plusieurs zones d'intérêt à entraîner, à utiliser pour les prédictions de trajectoires à entraîner, correspondant à chacune des trames à entraîner, et
(v) un processus consistant à minimiser (v-1) chacune d'une ou plusieurs pertes d'explication calculées, en se référant à chaque élément des informations d'explication à entraîner et à chacune de leurs vérités de base d'explication correspondantes, et (v-2) chacune d'une ou plusieurs pertes d'attention calculées, en se référant à chacune des cartes d'attention à entraîner et à chacune de leurs vérités de base d'attention correspondantes.

3. Procédé selon la revendication 1, dans lequel, à l'étape (b), le dispositif de prédiction de trajectoires effectue, ou prend en charge un autre dispositif pour effectuer, un processus consistant à donner instruction au module d'explication de
(i) réduire les dimensions des images de test, des métadonnées à tester et des caractéristiques à tester, pour générer ainsi chacune parmi des caractéristiques latentes à tester correspondant à chacune des trames à tester, par l'intermédiaire d'un codeur d'un auto-encodeur, et
(ii) reconstruire chacune des caractéristiques latentes à tester et marquer chacun des facteurs affectant à tester en tant que zones d'intérêt à tester, pour générer ainsi chaque élément des informations d'explication à tester, par l'intermédiaire d'un décodeur de l'auto-encodeur.

4. Procédé selon la revendication 3, dans lequel, à l'étape (c), le dispositif de prédiction de trajectoires effectue, ou prend en charge un autre dispositif pour effectuer, un processus consistant à donner instruction au module de visualisation de marquer au moins un objet cible comme l'une des zones d'intérêt à tester sur chacune des images de test et de fournir en sortie chacune des images de test marquées, en se référant aux prédictions de trajectoires à tester et aux informations d'explication à tester, dans lequel l'objet cible est déterminé comme affectant les prédictions de trajectoires à tester dans chacune des trames à tester.

5. Procédé selon la revendication 1, dans lequel, à l'étape (b), le dispositif de prédiction de trajectoires effectue, ou prend en charge un autre dispositif pour effectuer, un processus consistant à donner instruction au module d'explication de (i)(i-1) appliquer l'opération apprise aux images de test, aux métadonnées à tester, et aux caractéristiques à tester, pour générer ainsi chacune parmi des images de segmentation sémantique à tester correspondant à chacune des trames à tester et (i-2) identifier des zones d'intérêt par instance sur les images de segmentation sémantique à tester, par l'intermédiaire de l'auto-encodeur, et (ii) générer chacune parmi des images d'explication à tester, correspondant à chacune des trames à tester, dans lesquels les facteurs affectant à tester sont marqués en se référant aux résultats de ladite étape (i-2).

6. Procédé selon la revendication 1, dans lequel, à l'étape (b), le dispositif de prédiction de trajectoires effectue, ou prend en charge un autre dispositif pour effectuer, un processus consistant à donner instruction au module d'explication d'appliquer l'opération apprise aux métadonnées à tester, pour générer ainsi des arbres de décision à tester sur la base des métadonnées à tester connexes à tous les objets à tester sur les images de test.

7. Procédé selon la revendication 6, dans lequel, à l'étape (c), le dispositif de prédiction de trajectoires effectue, ou prend en charge un autre dispositif pour effectuer, un processus consistant à donner instruction au module de visualisation de fournir en sortie des informations d'état sur au moins un objet cible, déterminé comme affectant les prédictions de trajectoires à tester dans chacune des trames à tester, en se référant aux arbres de décision à tester et aux informations d'explication à tester.

8. Procédé selon la revendication 1, dans lequel, à l'étape (a), le dispositif de prédiction de trajectoires effectue, ou prend en charge un autre dispositif pour effectuer, un processus consistant à appliquer en entrée les images de test et les informations de détection à tester, dans le module de reconnaissance de métadonnées, pour permettre ainsi au module de reconnaissance de métadonnées de (1) détecter des informations d'environnement sur les environs du sujet en mouvement par le biais d'un module de perception et (2) détecter des informations de position sur le sujet en mouvement par le biais d'un module de localisation et de mappage.

9. Procédé selon la revendication 1, dans lequel chaque élément des métadonnées à tester comprend chacun parmi des rectangles englobants d'objets correspondant à chacun des objets à tester, chaque élément d'informations de pose sur le sujet en mouvement, et chaque élément d'information de carte correspondant à une localisation du sujet en mouvement.

10. Procédé selon la revendication 1, dans lequel le module de prédiction de trajectoires comprend un réseau de neurones récurrent (RNN) qui adopte au moins l'un parmi un algorithme de mémoire à long et court terme (LSTM) et un algorithme de réseau antagoniste génératif à mémoire à long et court terme (LSTM-GAN).

11. Dispositif de prédiction de trajectoires (1000) destiné à prédire des trajectoires, installé sur un sujet en mouvement, le dispositif comprenant :
une caméra montée sur le sujet en mouvement;
un ou plusieurs capteurs montés sur le sujet en mouvement;
au moins une mémoire (1001) qui stocke des instructions ; et
au moins un processeur (1002) configuré pour exécuter les instructions afin d'effectuer, ou de prendre en charge un autre dispositif pour effectuer, les processus suivants :
(I)(i) un processus consistant à appliquer en entrée chacune d'une ou plusieurs images de test correspondant à chacune d'une ou plusieurs trames à tester sur la vidéo à tester prise par la caméra et chaque élément des informations de détection à tester, détectées pendant que le sujet se déplace, correspondant à chacune des trames à tester dans un module de reconnaissance de métadonnées (200), pour permettre ainsi au module de reconnaissance de métadonnées d'appliquer au moins une opération apprise aux images de test et aux informations de détection à tester et par conséquent de fournir en sortie chaque élément de métadonnées à tester correspondant à chacune des trames à tester, et
(I)(ii) un processus consistant à appliquer en entrée les métadonnées à tester dans un module de codage de caractéristiques (300), pour permettre ainsi au module de codage de caractéristiques de coder les métadonnées à tester et par conséquent de fournir en sortie chacune des caractéristiques à tester correspondant à chacune des trames à tester ;
(II)(iii) un processus consistant à appliquer en entrée chacune des caractéristiques à tester dans un module de prédiction de trajectoires (400), pour permettre ainsi au module de prédiction de trajectoires d'analyser les caractéristiques à tester et de prédire chacune d'une ou plusieurs trajectoires d'un ou plusieurs objets à tester, par le biais de l'opération apprise, et de générer par conséquent chacune des prédictions de trajectoires à tester ; et
(III)(i)un processus consistant à permettre à un module de fourniture en sortie (500) de fournir en sortie chacun parmi des résultats de trajectoires à tester, correspondant à chacune des prédictions de trajectoires à tester, de chacun des objets à tester,
**caractérisé en ce que** le dispositif de prédiction de trajectoires (1000) est configuré pour prédire les trajectoires en utilisant une attention auto-focalisée explicative, et **en ce que**, lors du processus (II), le processeur effectue, ou prend en charge un autre dispositif pour effectuer, en outre
(II)(i) un processus consistant à appliquer en entrée chacune des images de test, chaque élément des métadonnées à tester et chacune des caractéristiques à tester dans un module d'explication (600), pour permettre ainsi au module d'explication de générer chaque élément d'informations d'explication à tester, correspondant à chacune des trames à tester, sur chacun parmi des facteurs affectant à tester déterminés comme affectant une ou plusieurs prédictions de trajectoires à tester pour chacune des trames à tester,
(II)(ii) un processus consistant à appliquer en entrée chacune des images de test et chaque élément des métadonnées à tester dans un module d'attention auto-focalisée (700), pour permettre ainsi au module d'attention auto-focalisée de fournir en sortie, par le biais de l'opération apprise, chacune parmi des cartes d'attention à tester correspondant à chacune des trames à tester, dans lesquelles chacune des cartes d'attention à tester est créée en marquant une ou plusieurs zones d'intérêt (AOI) à tester, à utiliser pour les prédictions de trajectoires à tester, sur chacune des images de test,
**en ce que** le processus (II)(iii) comprend en outre le fait d'appliquer en entrée chacune des cartes d'attention à tester dans le module de prédiction de trajectoires (400) en plus d'appliquer en entrée chacune des caractéristiques à tester, pour permettre ainsi au module de prédiction de trajectoires d'analyser les caractéristiques à tester et les cartes d'attention à tester,
et **en ce que** le processus (III) comprend en outre
(III)(ii) un processus consistant à permettre à un module de visualisation (800) de visualiser et de fournir en sortie les facteurs affectant à tester en marquant au moins un objet cible en tant que l'une des zones d'intérêt à tester sur chacune des images de test, et de fournir en sortie chacune des images de test marquées, en se référant aux prédictions de trajectoires à tester et aux informations d'explication à tester, dans lequel l'objet cible est déterminé comme affectant les prédictions de trajectoires à tester dans chacune des trames à tester.

12. Dispositif de prédiction de trajectoires selon la revendication 11, dans lequel un dispositif d'apprentissage a entraîné le module d'explication et le module d'attention auto-focalisée en effectuant, ou en prenant en charge un autre dispositif pour effectuer :
(i) un processus consistant à appliquer en entrée chacune parmi des images d'entraînement correspondant à chacune parmi des trames à entraîner et chaque élément d'informations de détection à entraîner correspondant à chacune des trames à entraîner, dans le module de reconnaissance de métadonnées, pour permettre ainsi au module de reconnaissance de métadonnées de fournir en sortie chaque élément de métadonnées à entraîner correspondant à chacune des trames à entraîner,
(ii) un processus consistant à appliquer en entrée les métadonnées à entraîner dans le module de codage de caractéristiques, pour permettre ainsi au module de codage de caractéristiques de coder les métadonnées à entraîner et par conséquent de fournir en sortie chacune parmi des caractéristiques à entraîner, correspondant à chacune des trames à entraîner,
(iii) un processus consistant à appliquer en entrée chacune des images d'entraînement, chaque élément des métadonnées à entraîner, et chacune des caractéristiques à entraîner, dans le module d'explication, pour permettre ainsi au module d'explication de générer chaque élément d'informations d'explication à entraîner correspondant à chacune des trames à entraîner, sur chacun parmi des facteurs affectant à entraîner déterminés comme affectant une ou plusieurs prédictions de trajectoires à entraîner pour chacune des trames à entraîner,
(iv) un processus consistant à appliquer en entrée chaque élément des informations d'explication à entraîner et chaque élément des métadonnées à entraîner, dans le module d'attention auto-focalisée, pour permettre ainsi au module d'attention auto-focalisée d'analyser les informations d'explication à entraîner et les métadonnées à entraîner, et par conséquent de fournir en sortie chacune parmi des cartes d'attention à entraîner correspondant à chacune des trames à entraîner, dans lesquelles chacune des cartes d'attention à entraîner est créée en marquant une ou plusieurs zones d'intérêt à entraîner, à utiliser pour les prédictions de trajectoires à entraîner, correspondant à chacune des trames à entraîner, et
(v) un processus consistant à minimiser (v-1) chacune d'une ou plusieurs pertes d'explication calculées, en se référant à chaque élément des informations d'explication à entraîner et à chacune de leurs vérités de base d'explication correspondantes, et (v-2) chacune d'une ou plusieurs pertes d'attention calculées, en se référant à chacune des cartes d'attention à entraîner et à chacune de leurs vérités de base d'attention correspondantes.

13. Dispositif de prédiction de trajectoires selon la revendication 11, dans lequel, lors du processus (II), le processeur effectue, ou prend en charge un autre dispositif pour effectuer, un processus consistant à donner instruction au module d'explication de (i) réduire les dimensions des images de test, des métadonnées à tester et des caractéristiques à tester, pour générer ainsi chacune parmi des caractéristiques latentes à tester correspondant à chacune des trames à tester, par l'intermédiaire d'un codeur d'un auto-encodeur, et (ii) reconstruire chacune des caractéristiques latentes à tester et marquer chacun des facteurs affectant à tester en tant que zones d'intérêt à tester, pour générer ainsi chaque élément des informations d'explication à tester, par l'intermédiaire d'un décodeur de l'auto-encodeur.

14. Dispositif de prédiction de trajectoires selon la revendication 13, dans lequel, au cours du processus (III), le processeur effectue, ou prend en charge un autre dispositif pour effectuer, un processus consistant à donner instruction au module de visualisation de marquer au moins un objet cible comme l'une des zones d'intérêt à tester sur chacune des images de test et de fournir en sortie chacune des images de test marquées, en se référant aux prédictions de trajectoires à tester et aux informations d'explication à tester, dans lequel l'objet cible est déterminé comme affectant les prédictions de trajectoires à tester dans chacune des trames à tester.

15. Dispositif de prédiction de trajectoires selon la revendication 11, dans lequel, lors du processus (II), le processeur effectue, ou prend en charge un autre dispositif pour effectuer, un processus consistant à donner instruction au module d'explication de (i)(i-1) appliquer l'opération apprise aux images de test, aux métadonnées à tester, et aux caractéristiques à tester, pour générer ainsi chacune parmi des images de segmentation sémantique à tester correspondant à chacune des trames à tester et (i-2) identifier des zones d'intérêt par instance sur les images de segmentation sémantique à tester, par l'intermédiaire de l'auto-encodeur, et (ii) générer chacune parmi des images d'explication à tester, correspondant à chacune des trames à tester, dans lesquels les facteurs affectant à tester sont marqués en se référant aux résultats de ladite étape (i-2).
